# EUROPEAN PATENT SPECIFICATION

(11) **EP 4 294 858 B1**
(45) Date of publication and mention of the grant of the patent: **26.03.2025**
(21) Application number: 22724946.3
(22) Date of filing: 15.02.2022
(51) Int. Cl.: C08H 99/00, C08B 31/00, C08J 3/00, C08J 11/04, C08L 3/02, C08L 23/12

(54) **A METHOD FOR OBTAINING PLASTIC ADMIXTURE MATERIAL AND BIOPLASTIC MATERIAL FROM BREAD WASTE**
VERFAHREN ZUR HERSTELLUNG EINES PLASTISCHEN BEIMENGUNGMATERIALS UND EINES BIOPLASTISCHEN MATERIALS AUS BROTABFÄLLEN
PROCÉDÉ D'OBTENTION D'UN ADDITIF PLASTIQUE ET D'UN BIOPLASTIQUE À PARTIR DE DÉCHETS DE PAIN

(30) Priority: 18.02.2021 TR 202102305
(43) Date of publication of application: 27.12.2023
(73) Proprietor: Koksal, Hatice Busra, Bagcilar/Istanbul (TR)
(72) Inventor: Koksal, Hatice Busra, Bagcilar/Istanbul (TR)
(74) Representative: Maidment, Marc
(86) International application number: PCT/TR2022/050128
(87) International publication number: WO 2022/177533

(56) References cited:
- TSANG YIU FAI ET AL: "Production of bioplastic through food waste valorization", ENVIRONMENT INTERNATIONAL, vol. 127, 13 April 2019 (2019-04-13), pages 625 - 644, XP085684191, ISSN: 0160-4120, DOI: 10.1016/J.ENVINT.2019.03.076
- LAM KOON FUNG ET AL: "Economic feasibility of a pilot-scale fermentative succinic acid production from bakery wastes", FOOD AND BIOPRODUCTS PROCESSING, vol. 92, no. 3, 1 July 2014 (2014-07-01), GB, pages 282 - 290, XP055945611, ISSN: 0960-3085, DOI: 10.1016/j.fbp.2013.09.001
- IMMONEN MIKKO ET AL: "Waste bread recycling as a baking ingredient by tailored lactic acid fermentation", INTERNATIONAL JOURNAL OF FOOD MICROBIOLOGY, ELSEVIER BV, NL, vol. 327, 4 May 2020 (2020-05-04), XP086166759, ISSN: 0168-1605, [retrieved on 20200504], DOI: 10.1016/J.IJFOODMICRO.2020.108652

## Description

### TECHNICAL FIELD

The invention relates to the production of a sustainable plastic admixture material and bioplastic material from waste bread, wherein less harmful and waste materials for nature can be evaluated.

### PRIOR ART

The desire to produce more and become rich, which started with the placing of science at the disposal of production, causes the resources to be used as if they will never run out. However, the production wastes and consumption wastes obtained as a result of this production frenzy has started to pollute the atmosphere, seas, rivers and land parts on an international scale (Marmolejo et al., 2012; Yücel and Ekmekgiler, 2008).

Until the 20th century, since the use of plastic was low and plastic waste was not high, it did not pose a great danger to living things and was not perceived as an environmental problem. Since the 20th century, with the widespread use of plastic and the increase in plastic waste, it has begun to pose a danger to all living things, especially humans, and the environment.

Plastic waste, which is increasing day by day due to the use of plastic, has started to be seen as a big problem due to the damage to all living things and the environment. For this reason, the production of more environmentally friendly equivalent products that can be biodegraded in nature more easily and replace the existing plastics has started to form the basis of the study subjects.

The largest sector in which food a lot of waste are generated is the food and beverage sector (Creedon et al., 2010). Food and beverage industry has become one of the largest sectors not only in the world, but also in our country, due to its contribution to the economy and the employment opportunities it creates (Özdemir, 2010). Many countries, institutions and civil society organizations conduct studies on food waste, which has become a global problem. Waste disposal of food wastes causes environmental, economic and ethical problems (Parizeau, Massow and Martin, 2015; Marthinsen et al. 2012). Only in Turkey, approximately 5 billion pieces of bread are not reused as waste per year. For this reason, studies on the evaluation of food wastes in sustainable production methods and thus bringing back into the economic cycle continue at full speed around the world.

The subject of the invention with application number TR 2019/06799 is directed to the production of bioplastics from waste olive seeds (pomace). Processes performed in the present invention are directed to olive seeds. In this invention, it is ensured that the cellulose in the olive seed is separated, polymerization is carried out and bioplastic material is obtained.

The invention with application number TR 2013/15119 is directed to the production of bio-ethanol from waste bread. In "Production of bioplastic through food waste valorization" (Environment International, vol. 127 , pages 625-644), Tsang Yiu Fai et Al describe general methods of modifying the properties and structure of starch contained in bread waste.

The invention numbered US 201816101435 is directed to the production of bioplastics from pumpkins. Accordingly, the invention includes some embodiments in order to obtain bioplastic from pumpkin.

There are many studies on the evaluation of many waste products in the relevant technical field. One of these studies is the production of bioplastics from agricultural or food waste. Although bioplastics can be obtained from many different waste raw materials, the owners of the studies have doubts about their commercialization and cost-effective production (the rush to make a profit).

It is possible to include the waste breads in the sustainable production method, and thus to provide the production of both low-cost raw material and the production of more environmentally friendly plastic. As a result, it is thought that some regulations and innovations should be brought to the relevant technical field in order to make it possible to obtain more environmentally friendly plastic materials from waste bread.

### SUMMARY OF THE INVENTION

The present invention relates to the production method of a bioplastic and/or plastic admixture material in order to eliminate the above-mentioned disadvantages and to bring new advantages to the related technical field.

An object of the invention is to reveal a production method for obtaining bioplastic or plastic admixture material from bread waste.

An object of the invention is to provide the production of an environmentally friendly (degradable in nature in a short time) plastic admixture material and bioplastic for the relevant technical field.

The invention relates to the production method of bioplastic and/or plastic admixture material. Accordingly, the production method includes the following process steps;
- cutting bread waste by slicing and allowing to dry,
- bringing the bread wastes into powder form by grinding process after the drying process,
- obtaining waste bread powder:water mixture by adding water to bread waste in powder form and dissolving,
- adding HCl with a concentration of at least 30% to the waste bread powder:water mixture,
- by adding HCl, releasing the starches in the powdered bread waste, and then by adding glycerin, achieving the polymerization, and obtaining the mixture containing bio-raw material,
- adding NaOH neutralizing the mixing medium,
- adding sodium metabisulphite-water solution to the mixture and then allowing the mixture to dry,
- reducing the dimension of the dried bio-raw material by grinding,
- mixing the resulting bio-raw materials by subjecting to the twin screw extruder process and adding maleic anhydride and an antioxidant as an additional component and obtaining bioplastic as a result of the processes.

In this way, it is ensured that the production of an environmentally friendly (degradable in nature in a short time) plastic admixture material and bioplastic is carried out for the relevant technical field.

In the possible embodiment of the invention, the said production method includes the following process steps;
- Mixing powdered bread waste in water at a value between 1/1 and 2/1 (w/v) (g/mL),
- adding HCl with a concentration of at least 30% at a value between 1/10 (v/v) and 7/10 (v/v) to the resulting powdered bread waste:water mixture,
- adding glycerine to the mixture in a value between 2/10 (v/v) and 15/10 (v/v) of the water amount,
- adding a NaOH solution at a ratio between 2/10 (v/v) and 7/10 (v/v) in the mixture,
- adding sodium metabisulphite solution to the bio-raw material mixture at a value between 1/10 and 5/10 of the amount of added water,
- allowing the mixture to dry for 24 to 72 hours,
- subjecting the bio-raw material to the double extruding process at a maximum temperature of 250°C and obtaining bioplastic by adding 0.5-2% of maleic anhydride and 0.5-2% of antioxidant from the side feeder during the process.

In the possible embodiment of the invention, it is characterized in that the waste bread powder:water mixture is between 1,2:1 and 1,8:1 (g:mL). After this process, the bonds in the powdered bread waste are broken and the starch is released. In the possible embodiment of the invention, it is characterized in that the waste bread powder:water mixture is 1,5:1 (g:mL).

In a possible embodiment of the invention, said HCl is added to the waste bread powder:water mixture at a ratio between 2:10 (v:v) and 7:10 (v:v). After this process, the bonds in the powdered bread waste are broken and the starch is released.

In the possible embodiment of the invention, it is characterized in that the amount of said glycerin is added to be between 4:10 (v:v) and 12:10 (v:v) of the amount of water in the mixture. In this way, the polymerization process of the mixture is provided.

In the possible embodiment of the invention, the amount of said NaOH is between 4:10 (v:v) and 6:10 (v:v) in the mixture.

In the possible embodiment of the invention, the said drying process is carried out for 48 hours.

### BRIEF DESCRIPTION OF THE FIGURES

Figure 1 shows the reference polypropylene TGA graph compared with the bioplastic and/or plastic admixture material of the invention.
Figure 2 shows the reference propylene DSC graph compared with the bioplastic and/or plastic admixture material of the invention.
Figure 3 shows the TGA graph of the plastic admixture material-polypropylene, in which the bioplastic and/or plastic admixture material of the invention is added at a value of 10% by weight.
Figure 4 shows the DSC graph of the plastic admixture material-polypropylene, in which the bioplastic and/or plastic admixture material of the invention is added at a value of 10% by weight.
Figure 5 shows the TGA graph of the plastic admixture material-polypropylene, in which the bioplastic and/or plastic admixture material of the invention is added at a value of 20% by weight.
Figure 6 shows the DSC graph of the plastic admixture material-polypropylene, in which the bioplastic and/or plastic admixture material of the invention is added at a value of 20% by weight.

### DETAILED DESCRIPTION OF THE INVENTION

In this detailed description, the subject of the invention relates to a production for obtaining bioplastic or plastic admixture material from bread waste; and it is only explained with examples that will not have any limiting effect only for a better understanding of the subject.

The term environmentally friendly is used as "quickly degradable in nature (dissoluble) and non-toxic effect".

In the relevant technical field, cellulose-based wastes or agricultural wastes are used as raw materials in the production of environmentally friendly bioplastics or plastic admixture materials. In general, since the amount of products obtained as a result of the processes of these cellulose-based and agricultural wastes is low, the cost per product is high. In addition, cellulose-based raw materials such as olive seeds are not as suitable for polymerization as starches. In this context, in the invention, starch-based bread waste is used as a raw material for the production of bioplastics and plastic admixture materials. The bread wastes are more suitable for polymerization, and when used as raw material, the product price per unit time is more economical compared to other agricultural or waste foodstuffs.

As mentioned before, the subject of the invention relates to the production of bioplastics and/or plastic admixture materials from bread waste; and it includes the following process steps;
- cutting bread waste by slicing and allowing to dry,
- bringing into powder form after drying process,
- obtaining a mixture by adding water to the powder form and dissolving,
- adding at least 30% concentration of HCl to the mixture,
- ensuring polymerization by adding glycerine, obtaining the bio-raw material mixture,
- adding NaOH neutralizing the mixing medium,
- adding sodium metabisulphite-water solution to the mixture and then allowing the mixture to dry,
- reducing the dimension of the dried bio-raw material by grinding.

Here, due to the slicing of bread waste, the drying process is accelerated and the surface area is expanded so that the starch can be separated more easily. The powdering of bread waste is also directed to the same purpose; and it is an issue to take into account that the powder form is not exposed to moisture in any way.

The bread wastes brought into powder form are mixed in water for the next processes. Said waste bread powder:water solution is adjusted to a value between 1:1 and 2:1 (w:v) (g:mL). Preferably, the waste bread powder:water mixture has a value between 1,2:1 and 1,8:1 (g:mL), most particularly the waste bread powder:water solution is 1,5:1.

The resulting bread powder:water mixture is treated with HCl at a concentration of at least 30% and at most 90% at room temperature. After this process, the bonds in the powdered bread waste are broken and the starch is released. The said HCl concentration is preferably between 30% and 32%. The amount of HCl is added to the mixture such that the amount of water added to the mixture is between 1:10 (v:v) and 7:10 (v:v). For example, for 100 mL of water, a minimum of 10 mL of HCl and a maximum of 70 mL of HCl are added. Preferably, this ratio is between 2:10 (v:v) and 7:10 (v:v). In particular, this ratio, namely the amount of HCl added, is half the amount of water in the mixture.

Glycerin, which is frequently used in the art, is added to the resulting mixture to ensure polymerization. The amount of glycerin can also be added based on the amount of water. Accordingly, glycerin is added to the mixture at a value between 2:10 (v:v) and 15:10 (v:v) of the amount of water. Preferably, the amount of glycerin is between 4:10 (v:v) and 12:10 (v:v) of the amount of water in the mixture. Preferably, the amount of glycerin is equal to the amount of water.

NaOH is added to the mixture after completion of polymerization to neutralize the mixture medium. The NaOH concentration is between 90% and 99%. The solution is added by adding the amount of NaOH with a concentration between 90% and 99% to the water. Accordingly, a NaOH-water solution is provided by adding 50 g of NaOH to 100 mL of water. The amount of said NaOH-water solution is added to the mixture and its ratio is 2:10 (v:v) to 7:10 (v:v). Preferably, this ratio is between 4:10 (v:v) and 6:10 (v:v).

Sodium metabisulphite-water solution [(1:2) (g:mL)] is added to the resulting bio-raw material to prevent from decaying. Said sodium metabisulphite solution is added to the bio-raw material mixture at a value between 1:10 and 5:10 of the amount of water added.

The drying process preferably takes between 24 and 72 hours. This processing time may vary depending on the amount of the product. This process is performed at room temperature.

The resulting product is used as a bio-raw material and then can be used in the production of biopolymer material by placing in the double extruder machine. While making the biopolymer material, maleic anhydride, antioxidant and/or silane are supplied from the feeding part together with the bio-raw material. Twin screw extruding process is performed at a maximum temperature of 250°C.

The amount of maleic anhydride is added in the twin screw extruder at a value between 0,5% and 2% by weight, based on the amount of bio-raw material.

One of the antioxidant materials can be added at a value of 0,5% to 2% to prevent the bio-raw material from burning in the double extruder process.

The bio-raw material obtained in the invention can act as an admixture material in the production of polymer material by the double extruder process. Here, polymers such as PE, PP, PET, PS can be used as a raw material source.

The bio-raw material is obtained by applying the said process steps. The bio-raw material can be used as plastic admixture material or bioplastic material together with other mixing materials.

The bioplastic material can be obtained by processing the resulting bio-raw material in the double extruder process. Here, at least one of the double extruder antioxidant, maleic anhydride and/or silane is added as admixture material together with the bio-raw material.

The invention is directed to obtaining bio-raw material by first obtaining starches from bread waste and then polymerizing the resulting starches. The present invention includes some embodiments for providing biopolymer raw materials from bread waste.

With the use of bread waste as raw material, only about 5 billion wastes per year can be prevented. It is thought that the invention will contribute to the inventions and studies related to the prevention of food waste, and the regaining of wastes to the economy with the sustainable production method.

The use of starches for polymerization from bread waste provides a different advantage. The bioplastic materials are obtained from some of the foods available in the art by polymerization of lactic acid or celluloses; their polymerization is not as high as the starch in bread waste. In this way, it is possible to obtain more bioplastic material than the unit amount of bread waste. As such the bread waste is a raw material with a lower cost than the bioplastic raw materials available in the art. In addition, the efficiency of the processes of obtaining bioplastic material from bread waste is much higher than the efficiency of other processes available in the art. For example, by following the production method provided in the invention, 1,5 tons of bio-raw material can be obtained from 1 ton of bread waste.

The bio-raw material obtained by the method provided in the invention can be dissolved in nature in a very short time.

### EXAMPLE

An exemplary application obtained with the method provided in the invention is given below. Accordingly, the production of bioplastic from bread waste is completed with the application of the following process steps.
- The breads are sliced and kept until the moisture inside is completely dry. Dried breads are brought into powder.
- The mixture is prepared by adding 100 ml of distilled water to 150 grams of bread.
- 20-70 ml of hydrochloric acid with a concentration of 30%-32% is added to the bread powder waste-water mixture.
- 20-150 ml of glycerine is added for the polymerization processes of the mixture.
- In order to neutralize the medium, we add 50 grams of sodium hydroxide with a concentration of 99%-99,5% to 100 ml of water. Then, this liquid solution is added to the bread powder waste-water mixture at a value of 20-70 ml and bio-raw material is obtained.
- In order to prevent the bio-raw material from decaying, 50 grams of sodium metabisulphite is added to 100 ml of water and 5-15 ml of this solution is added to our mixture.
- Finally, the resulting bio-raw material is dried for a period of 24-72 hours.
- As a result of cutting processes of dried bio-raw material, its dimensions are reduced.
- The resulting bio-raw material is included in the double extruder process, and wherein the bioplastic is obtained by adding 0.5-2% of maleic anhydride at the temperatures of 180-250°C and 0.5%-2% of antioxidants from the side feeder.

### TESTS

The bioplastic product obtained with the process steps given in the example section is added to the polypropylene polymer product in certain weight ratios as an admixture material and then mechanical tests are applied.

Accordingly, 10% and 20% by weight of bioplastic polypropylene is added as an admixture component according to the mechanical test results given in Table 1. Comparisons are made between the said bioplastic-polypropylene and reference polypropylene raw material.

**Table 1. Test results of mechanical strength of polypropylene, polypropylene containing bioplastic obtained from 10% by weight of bread waste, and polypropylene containing bioplastic obtained from 20% by weight of bread waste**

| Sample Name | 10% bioplastic-PP | 20% bioplastic-PP | PP |
|---|---|---|---|
| Maximum Load | 43.3 | 41.3 | 47.29 |
| Young Modulus | 1.66 | 1.07 | 1.01 |
| Yield Strength | 0.3 | 0.3 | 0.69 |
| Breaking Strength | 16.4 | 15.92 | 45.9 |
| Elongation at Break | 3.86 | 2.84 | 4.66 |
| Elongation at Yield Strength | 5.77 | 6.22 | 4.20 |

It is seen in the mechanical test results that there has not been much change in the mechanical strength with the addition of bioplastic obtained from bread waste to the polypropylene as a component. (There are standard deviations in the test results.) It can also be seen in the test results that the bioplastic obtained from bread waste can eliminate the use of polypropylene and replace it.

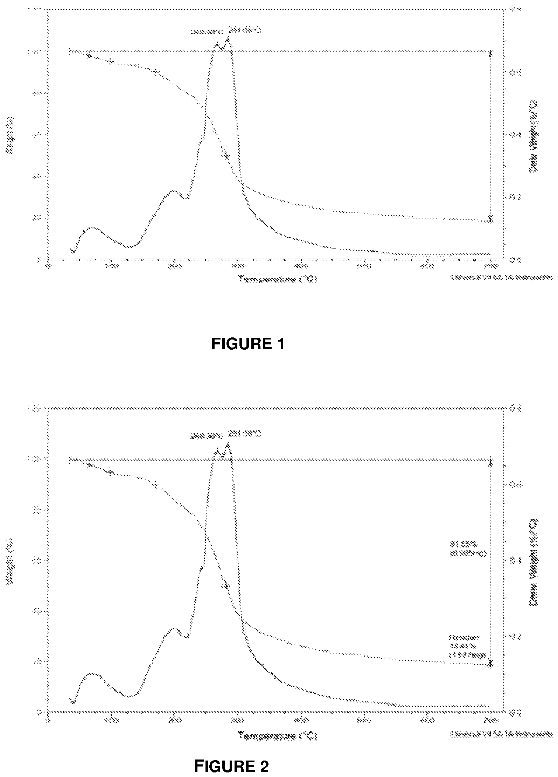

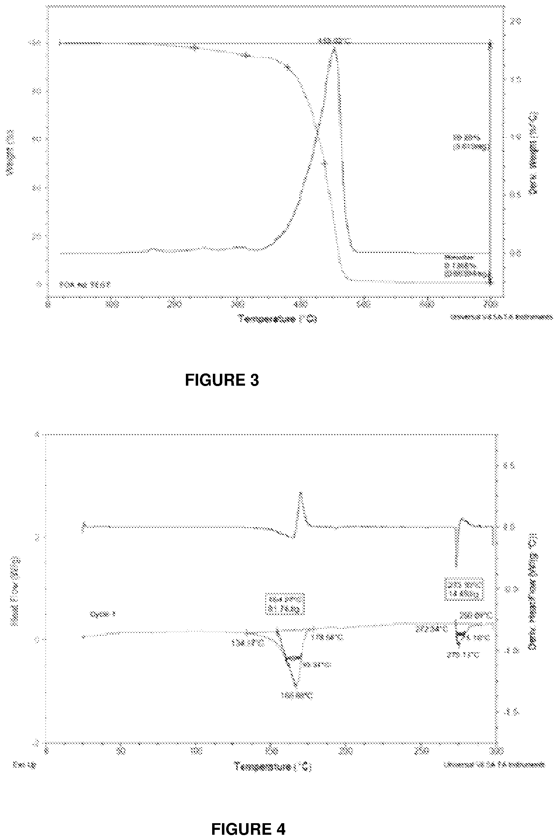

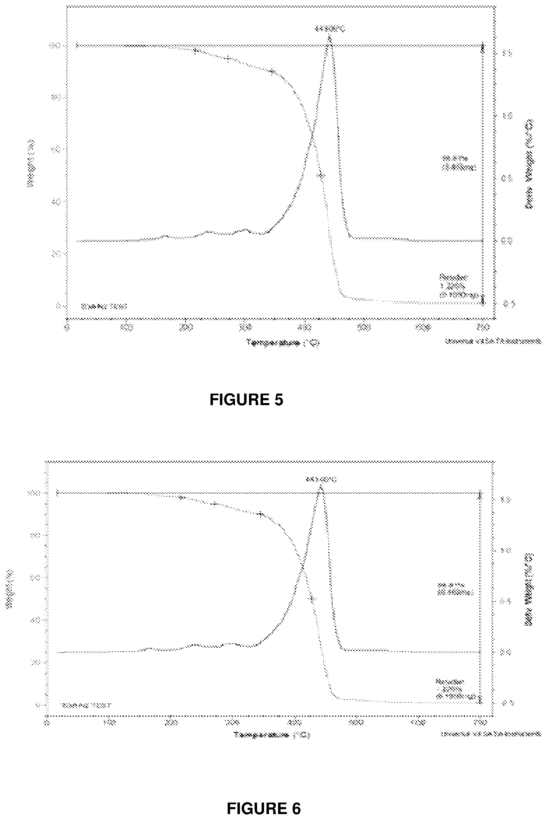

TGA analysis of reference polypropylene is given in Figure 1 and DSC analyzes are given in Figure 2. TGA analyzes of polypropylene to which 10% by weight of bioplastic component is added are given in Figure 3 and DSC analyzes are given in Figure 4. TGA analyzes of polypropylene to which 20% by weight of bioplastic component is added are given in Figure 5 and DSC analyzes are given in Figure 6. It can be seen in the said analyzes that bioplastics are similar to polypropylene and similar polymers as raw materials and there will be no problem in adding them as an admixture component. As a result, bioplastics obtained from bread waste can be added to the polypropylene as an admixture material, and thus, the use of polymer materials as raw materials, which is known to have many disadvantages in the related technical field, can be reduced. In addition, bread waste are also brought into a sustainable economic cycle.

The scope of protection of the invention is specified in the attached claims and it cannot be limited to what is explained in this detailed description for the sake of example.

## Claims

1. The production method of bioplastics and/or plastic admixture materials, **characterized in that** it includes the process steps of;
∘ cutting bread waste by slicing and allowing to dry,
∘ bringing the bread wastes into powder form by grinding process after the drying process,
∘ obtaining waste bread powder:water mixture by adding water to bread waste in powder form and dissolving,
∘ adding HCl with a concentration of at least 30% to the waste bread powder:water mixture,
∘ by adding HCl, releasing the starches in the powdered bread waste, and then by adding glycerin, achieving the polymerization, and obtaining the mixture containing bio-raw material,
∘ adding NaOH neutralizing the mixing medium,
∘ adding sodium metabisulphite-water solution to the mixture and then allowing the mixture to dry,
∘ reducing the dimension of the dried bio-raw material by grinding,
∘ mixing the resulting bio-raw materials by subjecting to the twin screw extruder process and adding maleic anhydride and an antioxidant as an additional component and obtaining bioplastic as a result of the processes.

2. A production method according to Claim 1, **characterized in that** it includes the process steps of;
• Mixing powdered bread waste in water at a value between 1/1 and 2/1 (w/v) (g/mL),
• adding HCl with a concentration of at least 30% at a value between 1/10 (v/v) and 7/10 (v/v) to the resulting powdered bread waste:water mixture,
• adding glycerine to the mixture in a value between 2/10 (v/v) and 15/10 (v/v) of the water amount,
• adding a NaOH solution at a ratio between 2/10 (v/v) and 7/10 (v/v) in the mixture,
• adding sodium metabisulphite solution to the bio-raw material mixture at a value between 1/10 and 5/10 of the amount of added water,
• allowing the mixture to dry for 24 to 72 hours,
• performing the twin screw extruder mixing process of the bio-raw material at a maximum temperature of 250°C and obtaining bioplastic by adding 0.5-2% of maleic anhydride and 0.5%-2% of antioxidant from the side feeder during the process.

3. A production method according to Claim 1 or Claim 2, **characterized in that** the waste bread powder:water mixture is between 1,2:1 and 1,8:1 (g:mL).

4. A production method according to Claim 3, **characterized in that** the waste bread powder:water mixture is 1,5:1 (g:mL).

5. A production method according to Claim 1 and Claim 2, **characterized in that** the said HCl is added at the ratios between 2/10 (v/v) and 7/10 (v/v) to the waste bread powder:water mixture.

6. A production method according to Claim 1 and Claim 2, **characterized in that** the said amount of glycerin is added at a value between 4/10 (v/v) and 12/10 (v/v) of the water amount in the mixture.

7. A production method according to Claim 1 or Claim 2, **characterized in that** the said amount of NaOH is between 4/10 (v/v) and 6/10 (v/v) in the mixture.

8. A production method according to Claim 1 or Claim 2, **characterized in that** the said drying process is performed for a period of 48 hours.

## Patentansprüche

1. Herstellungsverfahren für Biokunststoffe und/oder Kunststoffzusatzstoffe, **dadurch gekennzeichnet, dass** es die folgenden Prozessschritte umfasst:
∘ Schneiden von Brotabfällen durch Aufschneiden und Trocknen,
∘ Vermahlen der Brotabfälle nach dem Trocknungsprozess in Pulverform,
∘ Erzeugen eines Abfallbrotpulver-Wasser-Gemisches durch Zugeben von Wasser zu pulverförmigem Brotabfall und Auflösen,
∘ Zugeben von HCl in einer Konzentration von mindestens 30 % zum Abfallbrotpulver-Wasser-Gemisch,
∘ durch Zugeben von HCl, Freisetzung der Stärken in den Brotpulverabfall und anschließendes Zugeben von Glyzerin,
Erreichen der Polymerisation und Erzielung des Gemisches, das Biorohstoff enthält,
∘ Zugeben von NaOH zur Neutralisierung des Mischmediums,
∘ Zugeben einer Natriummetabisulfit-Wasser-Lösung zu dem Gemisch und anschließendes Trocknen des Gemisches,
∘ Verringern der Dimension des getrockneten Biorohstoffs durch Mahlen,
∘ Mischen der entstandenen Biorohstoffe durch Beaufschlagung im Doppelschnecken-Extruderprozess und Zugeben von Maleinanhydrid und einem Antioxidans als zusätzliche Komponente und Erzeugung von Biokunststoff als Ergebnis des Prozesses.

2. Herstellungsverfahren nach Anspruch 1, **dadurch gekennzeichnet, dass** es folgende Prozessschritte umfasst:
• Mischen von Brotpulverabfall in Wasser mit einem Wert zwischen 1/1 und 2/1 (w/v) (g/mL),
• Zugeben von HCl mit einer Konzentration von mindestens 30 % in einem Wert zwischen 1/10 (v/v) und 7/10 (v/v) zu dem entstehenden Abfallbrotpulver-Wasser-Gemisch,
• Zugeben von Glyzerin zu dem Gemisch in einem Wert zwischen 2/10 (v/v) und 15/10 (v/v) der Wassermenge,
• Zugeben einer NaOH-Lösung in einem Verhältnis zwischen 2/10 (v/v) und 7/10 (v/v) in das Gemisch,
• Zugeben einer Natriummetabisulfitlösung zu dem Biorohstoffgemisch in einem Wert zwischen 1/10 und 5/10 der zugegebenen Wassermenge,
• Trocknen des Gemisches für 24 bis 72 Stunden,
• Durchführen des Doppelschnecken-Extruder-Mischprozesses des Biorohstoffs bei einer maximalen Temperatur von 250 °C und Erzeugung von Biokunststoff durch Zugeben von 0,5-2 % Maleinanhydrid und 0,5-2 % Antioxidans aus dem Seitenzuführer während des Prozesses.

3. Herstellungsverfahren nach Anspruch 1 oder 2, **dadurch gekennzeichnet, dass** das Abfallbrotpulver-Wasser-Gemisch zwischen 1,2:1 und 1,8:1 (g:mL) liegt.

4. Herstellungsverfahren nach Anspruch 3, **dadurch gekennzeichnet, dass** das Abfallbrotpulver-Wasser-Gemisch 1,5:1 (g:mL) ist.

5. Herstellungsverfahren nach Anspruch 1 und Anspruch 2, **dadurch gekennzeichnet, dass** das genannte HCl in den Verhältnissen zwischen 2/10 (v/v) und 7/10 (v/v) dem Abfallbrotpulver-Wasser-Gemisch zugegeben wird.

6. Herstellungsverfahren nach Anspruch 1 und Anspruch 2, **dadurch gekennzeichnet, dass** die genannte Glyzerinmenge in einem Wert zwischen 4/10 (v/v) und 12/10 (v/v) der Wassermenge in das Gemisch zugegeben wird.

7. Herstellungsverfahren nach Anspruch 1 oder 2, **dadurch gekennzeichnet, dass** die Menge an NaOH zwischen 4/10 (v/v) und 6/10 (v/v) des Gemisches liegt.

8. Herstellungsverfahren nach Anspruch 1 oder 2, **dadurch gekennzeichnet, dass** der Trocknungsprozess über einen Zeitraum von 48 Stunden durchgeführt wird.

## Revendications

1. Procédé de production de bioplastiques et/ou d'additifs plastiques, **caractérisé en ce qu'**il comporte les étapes de procédé consistant à :
o couper des déchets de pain par tranchage et les laisser sécher,
o réduire les déchets de pain sous forme de poudre par un procédé de broyage après le procédé de séchage,
∘ obtenir un mélange poudre de pain de rebut:eau en ajoutant de l'eau aux déchets de pain sous forme de poudre et en les dissolvant,
o ajouter du HCI avec une concentration d'au moins 30 % au mélange poudre de pain de rebut:eau,
o en ajoutant du HCI, libérer les amidons dans les déchets de pain en poudre, puis en ajoutant de la glycérine, parvenir à la polymérisation, et obtenir le mélange contenant une matière première bio,
o ajouter du NaOH neutralisant le milieu de mélange,
o ajouter une solution de métabisulfite de sodium-eau au mélange puis laisser le mélange sécher,
o réduire la dimension de la matière première bio séchée par broyage,
o mélanger les matières premières bio résultantes en les soumettant au procédé d'extrudeuse à double vis et ajouter un anhydride maléique et un antioxydant en tant que constituant supplémentaire et obtenir un bioplastique suite aux procédés.

2. Procédé de production selon la revendication 1, **caractérisé en ce qu'**il comporte les étapes de procédé consistant à :
• mélanger des déchets de pain en poudre dans de l'eau à une valeur entre 1/1 et 2/1 (p/v) (g/ml),
• ajouter du HCI avec une concentration d'au moins 30 % à une valeur entre 1/10 (v/v) et 7/10 (v/v) au mélange déchets de pain en poudre:eau résultant,
• ajouter de la glycérine au mélange en une valeur entre 2/10 (v/v) et 15/10 (v/v) de la quantité d'eau,
• ajouter une solution de NaOH à un rapport entre 2/10 (v/v) et 7/10 (v/v) dans le mélange,
• ajouter une solution de métabisulfite de sodium au mélange de matière première bio à une valeur entre 1/10 et 5/10 de la quantité d'eau ajoutée,
• laisser le mélange sécher pendant 24 à 72 heures,
• réaliser le procédé de mélange par extrudeuse à double vis de la matière première bio à une température maximale de 250 °C et obtenir un bioplastique en ajoutant 0,5 à 2 % d'anhydride maléique et 0,5 % à 2 % d'antioxydant à partir du distributeur latéral pendant le procédé.

3. Procédé de production selon la revendication 1 ou la revendication 2, **caractérisé en ce que** le mélange poudre de pain de rebut:eau est entre 1,2:1 et 1,8:1 (g:ml).

4. Procédé de production selon la revendication 3, **caractérisé en ce que** le mélange poudre de pain de rebut:eau est 1,5:1 (g:ml).

5. Procédé de production selon la revendication 1 et la revendication 2, **caractérisé en ce que** ledit HCI est ajouté aux rapports entre 2/10 (v/v) et 7/10 (v/v) au mélange poudre de pain de rebut:eau.

6. Procédé de production selon la revendication 1 et la revendication 2, **caractérisé en ce que** ladite quantité de glycérine est ajoutée à une valeur entre 4/10 (v/v) et 12/10 (v/v) de la quantité d'eau dans le mélange.

7. Procédé de production selon la revendication 1 ou la revendication 2, **caractérisé en ce que** ladite quantité de NaOH est entre 4/10 (v/v) et 6/10 (v/v) dans le mélange.

8. Procédé de production selon la revendication 1 ou la revendication 2, **caractérisé en ce que** ledit procédé de séchage est réalisé pendant une période de 48 heures.
